# EUROPÄISCHE PATENTSCHRIFT

(11) **EP 1 454 372 B1**
(45) Veröffentlichungstag und Bekanntmachung des Hinweises auf die Patenterteilung: **04.05.2005**
(21) Anmeldenummer: 02796611.8
(22) Anmeldetag: 11.12.2002
(51) Int. Cl.: H01M 8/00

(54) **Verfahren zur Herstellung eines platten- oder scheibenförmigen Körper**
Method for producing a plate-shaped or disk-shaped body.
Procédé de fabrication d'un corps en forme de plaque ou de disque

(30) Priorität: 12.12.2001 DE 10161107
(43) Veröffentlichungstag der Anmeldung: 08.09.2004
(73) Patentinhaber: Schunk Kohlenstofftechnik GmbH, D-35452 Heuchelheim (DE)
(72) Erfinder: ARNOLD, Leonhard, 35415 Pohlheim (DE); SCHWARZER, Martin, 35461 Schöffengrund (DE); BANHARDT, Volker, 64625 Bensheim (DE)
(74) Vertreter: Stoffregen, Hans-Herbert, Dr. Dipl.-Phys.
(86) Internationale Anmeldenummer: PCT/EP2002/014095
(87) Internationale Veröffentlichungsnummer: WO 2003/050903

(56) Entgegenhaltungen:
- WO-A-00/16424
- DATABASE WPI Section Ch, Week 198851 Derwent Publications Ltd., London, GB; Class A85, AN 1988-365746 XP002260765 -& JP 63 276875 A (CHIYODA CHEM ENG CONSTR CO), 15. November 1988 (1988-11-15) -& PATENT ABSTRACTS OF JAPAN vol. 013, no. 106 (E-726), 14. März 1989 (1989-03-14) & JP 63 276875 A (CHIYODA CHEM ENG & CONSTR CO LTD), 15. November 1988 (1988-11-15)

## Beschreibung

Die Erfindung bezieht sich auf ein Verfahren zur Ausbildung einer Durchgangsaussparung in einem platten- oder scheibenförmigen Körper aus einem kunststoff- bzw. kunstharz- oder pechgebundenen Kunststoffmaterial, vorzugsweise wärmeaushärtbaren oder thermoplastischen Kunststoff mit einem Kohlenstoff- oder Graphit-Füllstoff mit einem Füllstoffanteil von insbesondere 70 Gew.% bis 95 Gew.%, insbesondere in Form einer Platte wie Bipolarplatte bestimmt für eine Brennstoffzelle oder Kohlekommutatorplatte oder Kontaktplatte für einen Erdungskontakt, wobei der scheiben- bzw. plattenförmiger Körper eine Durchgangsaussparung aufweist.

In Brennstoffzellen kann chemische Energie mit hohem Wirkungsgrad direkt in elektrischen Strom umgewandelt werden. Das Grundprinzip wird durch eine räumliche Trennung von Reaktionspartner wie Wasserstoff oder Methan einerseits und Sauerstoff bzw. Luft andererseits durch einen ionenleitfähigen Elektrolyten wie Polymerelektrolytmembran verwirklicht, die auf beiden Seiten mit porösen Elektroden - der Anode und der Kathode - in Kontakt steht. Auf diese Weise kann eine chemische Reaktion zwischen Wasserstoff und Sauerstoff nicht explosionsartig als Knallgasreaktion ablaufen, sondern so kontrolliert durchgeführt werden, dass ein Elektronenaustausch zwischen den Reaktionspartnern über einen äußeren Stromkreis erfolgt und somit die elektrische Energie liefert.

Entsprechende Brennstoffzellen weisen in Stapeln aneinandergereihte Bipolarplatten mit zwischen diesen angeordneten Membran-Elektroden-Anordnungen (MEA) auf Um eine hinreichende Dichtheit zwischen den Platten sicherzustellen, können diese gespannt werden. Hierzu werden in den Platten fluchtend zueinander verlaufende Bohrungen eingebracht, die von Spannelementen durchsetzt sind. Die Löcher können durch Bohren oder Fräsen hergestellt werden. Dies ist aufwendig und daher mit dem Nachteil behaftet, nicht seriengeeignet zu sein.

Auch plattenförmige Kohlekommutatorplatten oder Kontaktplatten für Erdungskontakte müssen mit Löchern versehen werden, damit erstere befestigt werden können. Die Löcher werden ebenfalls durch Fräsen oder Bohren ausgebildet.

Eine Ausbildung von Löchern bei der Formgebung der Platte ist auch bekannt.

Aus der DE 195 42 721 A1 ist ein Verfahren zur Herstellung von Formkörpern z.B. in Form von Platten bestimmt für elektrische oder elektrochemische Zwecke bekannt, die aus Kunststoff-Füllmischungen mit einem hohen Gehalt an Füllstoffen bestehen. Dabei können die Platten auf einer oder auf beiden ihrer Flachseiten mit einem Profil versehen werden. Dies kann mittels z.B. Prägewalzen oder spanender Bearbeitung auf programmgesteuerten Bearbeitungsmaschinen erfolgen.

Eine Bipolarplatte nach der DE 100 19 094 A1 besteht aus einem äußeren aus elektrisch nichtleitendem Kunststoff und einem inneren metallischen oder kohlestoffhaltigen Bereich. Der innere Teil weist Ausfräsungen zur Ausbildung von Kanälen auf Die äußeren Teile sind zur Stackmontage mit Bohrungen versehen.

Aus der WO 00/16424 ist ein Heißpressverfahren zur Herstellung von Platten bekannt.

Aus der JP 63276875 (PAJ) ist eine gestangte Kohlenstoffplatte bekannt.

Der vorliegenden Erfindung liegt das Problem zugrunde, einen platten- oder scheibenförmigen Körper der eingangs genannten Art mit zumindest einer Durchgangsaussparung zur Verfügung zu stellen, die hinsichtlich Form und Lagepositionierung überaus präzise ist.

Erfindungsgemäß wird das Problem im Wesentlichen dadurch gelöst, dass die Durchgangsaussparung in dem platten- bzw. scheibenförmigen Körper durch Stanzen ausgebildet ist. Insbesondere handelt es sich bei der Durchgangsaussparung um eine Durchbrechung oder Ausklinkung.

Abweichend vom vorbekannten Stand der Technik erfolgt keine spanende Bearbeitung, um Löcher bzw. Ausklinkungen auszubilden, sondern ein Ausschneiden mit einem Stanzwerkzeug wie insbesondere Presse.

In Weiterbildung der Erfindung ist vorgesehen, dass die durch Stanzen ausgebildete Durchbrechung in einem Bereich des platten- bzw. scheibenförmigen Körpers verläuft, der eine Dicke D mit D ≤ 5mm, insbesondere D ≤ 2mm aufweist.

Abweichend vom vorbekannten Stand der Technik wird ein platten- oder scheibenförmiger Körper aus einem kunststoff- bzw. kunstharz- oder pechgebundenen Kohlenstoff- bzw. Graphitmaterial mit einer Durchbrechung zur Verfügung gestellt, die nicht durch Fräsen oder Bohren oder beim Pressen ausgebildet wird, sondern durch Stanzen hergestellt ist. Hierdurch wird eine Durchbrechung zur Verfügung gestellt, die einer Nachbearbeitung nicht bedarf. Auch ist eine exakte Lagepositionierung gewährleistet.

Ein Verfahren zur Ausbildung einer Durchgangsaussparung in einem platten- oder scheibenförmigen Körper aus einem kunststoff- bzw. kunstharz- oder pechgebundenen Kohlenstoff- bzw. Graphitmaterial, insbesondere aus wärmeaushärtbarem oder thermoplastischem Kunststoff mit Kohlenstoff-Füllstoff mit einem Füllstoffanteil von insbesondere 70 Gew.% bis 95 Gew.% zeichnet sich dadurch aus, dass die Durchgangsaussparung durch Stanzen ausgebildet wird. Dabei erfolgt das Stanzen insbesondere durch ein Feinschnittwerkzeug. Insbesondere sollte der platten- oder scheibenförmige Körper in einem Bereich ausgestanzt werden, in dem dieser eine Dicke D mit ≤ 5mm, insbesondere D ≤ 2mm aufweist.

Die Erfindung wird nachstehend anhand von bevorzugten Ausführungsbeispielen näher erläutert.

### Beispiel 1:

Zur Herstellung einer Bipolarplatte bestimmt für eine Brennstoffzelle wurden 900g Graphit einer Kornfraktion bis 200 µm kugeliger Geometrie, 100g Phenolharz in einem Mischer bei einer Temperatur von 80C° über einen Zeitraum von 10 Min. vermischt. Die Mischung wurde anschließend in eine Pressform einer Heißpresse gefüllt, um sodann durch plastisches Verformen und Härten der Mischung durch Heizpressen die Bipolarplatte herzustellen. Ober- und/oder Unterstempel der Presse wiesen dabei eine formgebende Struktur auf, so dass sich in der Platte mäanderförmig verlaufende Kanäle ausbildeten, über die bei einer zusammengesetzten Brennstoffzelle Reaktanden strömen.

Um in Eckbereichen Durchgangsbohrungen bzw. Ausklinkungen auszubilden, wurden die fertiggestellten Platten einem Feinschnittwerkzeug zugeführt, um diese zu stanzen.

### Beispiel 2:

Zur Herstellung eines Flachkommutators wurden 70 Gew.% Koks, 30 Gew.% Graphit und 10 Gew.% Ruß zusammen mit 30 Gew.% Pech bezogen auf die Feststoffe Koks, Graphit und Ruß gemischt, gemahlen und verpresst. Anschließend erfolgte ein Glühen bei einer Temperatur von in etwa 1000 °C und ein Graphitieren bei einer Temperatur von ca. 2800 °C. Es wurden sodann Plättchen einer Dicke von 3mm und eines Außendurchmessers von 35mm hergestellt. In diese wurden Durchgangsöffnungen mit einem Innendurchmesser von 10mm gestanzt.

### Beispiel 3:

Um Widerstandsringe mit Löchern zu versehen, wurde eine Ausgangsmischung entsprechend dem Beispiel 2 gemischt, gemahlen verpresst und bei einer Temperatur von in etwa 1000 °C geglüht. Ein Graphitieren erfolgte jedoch nicht. Man erhielt scheibenförmige Blättchen einer Stärke von 1,2 mm und einem Außendurchmesser von 100mm, in die Löcher mit einem Innendurchmesser von 85mm gestanzt wurden.

Weitere Einzelheiten, Vorteile und Merkmale der Erfindung ergeben sich auch aus den nachstehend erläuterten Ausführungsbeispielen:

Es zeigen:

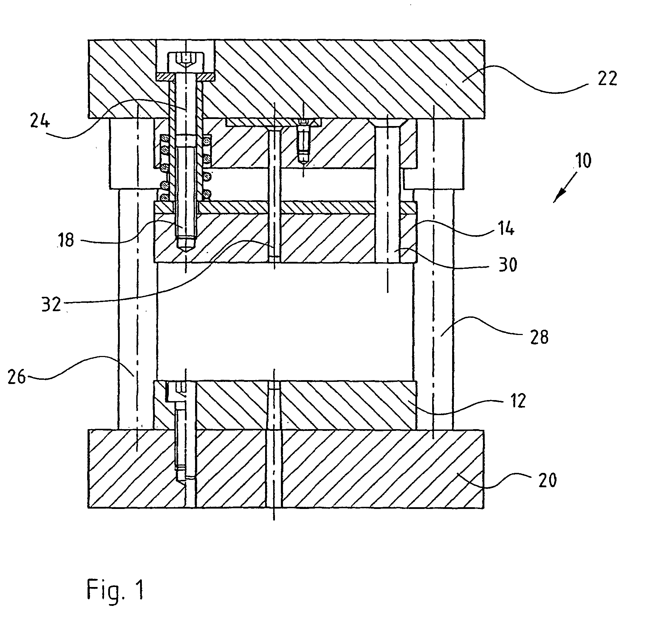

- Fig. 1: eine Prinzipdarstellung eines Werkzeugs zur Ausbildung von Durchgangsaussparungen und
- Fig. 2 a-e: Prinzipdarstellungen von verschiedenen Ausgangskörpern sowie einen entsprechenden mit einer Durchgangsaussparung versehenen Körper.

Um in einen platten- oder scheibenförmigen Körper, der insbesondere aus einem wärmeaushärtbaren oder thermoplastischen Kunststoff mit Kohlenstoff bzw. Kunststoffgraphitfüllstoff mit einem Füllstoffanteil von insbesondere 70 Gew.% bis 95 Gew.% besteht, eine Durchgangsbohrung durch Stanzen auszubilden, wird eine Vorrichtung 10 benutzt, die als wesentliche Bestandteile eine Schnittplatte 12, einen Niederhalter 14 und Stanzelemente 30, 32 umfasst.

Die Schnittplatte 12 ist auf einem Träger 20 gelagert, zu dem der Niederhalter 14 verstellbar ist, der seinerseits von einer Halterung 22 ausgeht, der über federvorgespannte Führungselemente 24 zu dem Niederhalter 14 axial verstellt werden kann. Die Halterung 22 selbst ist entlang von Säulen 26, 28 verstellbar.

Der Niederhalter 14 wird von von der Halterung 22 ausgehenden Stanzstempeln 30, 32 durchsetzt, mittels denen in einem auf die Schnittplatte 12 auflegbaren Körper Durchgangsöffnungen ausgebildet werden sollen. Dabei drückt der Niederhalter 14 den Körper mit dem erforderlichen Anpressdruck auf die Schnittplatte 12, bevor mittels des Stempels 30 bzw. 32 die Durchgangsaussparung ausgestanzt wird. Übliche Anpressdrücke liegen zwischen 2 MPa und 20 MPa oder mehr.

Löcher mit Durchmessern D von mehr als 1 mm bei einer Plattendicke vorzugsweise zwischen 0,5 mm und 10 mm können mit hoher Präzision ausgestanzt werden. Dabei können die Stempel Querschnitte aufweisen, um Rundlöcher, Langlöcher, Vierecke wie Quadrate oder Rechtecke, Ellipsen oder sonstige Geometrien auszustanzen.

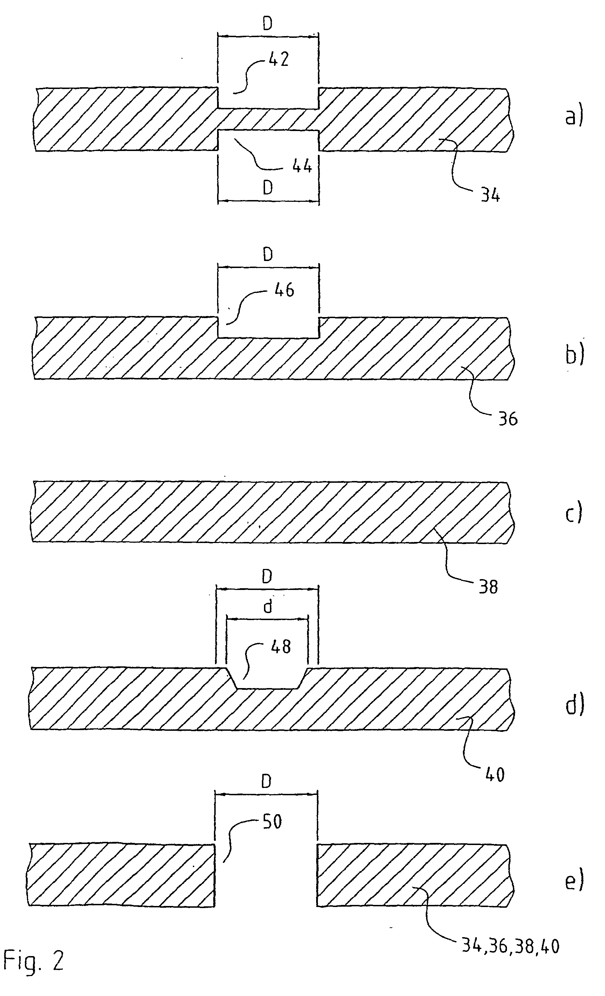

In den Fig. 2a bis d sind plattenförmige Körper 34, 36, 38, 40 im Ausschnitt dargestellt, die entweder vor dem Stanzvorgang eine gleichmäßige Dicke (Fig. 2c) aufweisen können, oder im Bereich der durchzuführenden Stanzung bereits vorgepresste Vertiefungen 42, 44 oder vorgeprägte Vertiefungen 46 aufweisen können, deren Geometrie der Ausstanzung entspricht, so dass im Falle eines Kreises der Durchmesser D der Vertiefungen 42, 44 dem der gestanzten Aussparung der fertigen Platte 34, 36, 38, 40 entspricht.

Auch kann in einer Platte 40 eine vorgepresste Vertiefung 48 mit einem geringeren Durchmesser d vorgebildet sein, um anschließend den Stanzvorgang durchzuführen, um eine Durchgangsdurchbrechung mit einem Durchmesser D zu stanzen.

## Patentansprüche

1. Verfahren zur Ausbildung einer Durchgangsaussparung (50) in einem platten- oder scheibenförmigen Körper (34, 36, 38, 40) aus einem kunststoff- bzw. kunstharz- oder pechgebundenem Kohlenstoff- bzw. Graphit-Material, insbesondere aushärtbaren bzw. thermoplastischen Kunststoff mit Kohlenstoff-Füllstoff mit einem Füllstoffanteil von insbesondere 70 Gew.% bis 95 Gew.-%,
**dadurch gekennzeichnet,**
**dass** der platten- oder scheibenförmige Körper (34, 36, 38, 40) zwischen einer Schnittplatte (12) und einem Niederhalter (14) fixiest und sodann mittels eines Stempels (30, 32) die Durchgangsaussparung durch Stanzen ausgebildet wird.

2. Verfahren nach Anspruch 1,
**dadurch gekennzeichnet,**
**dass** die Durchgangsaussparung (50) durch ein Feinschnittwerkzeug ausgebildet ist.

3. Verfahren nach Anspruch 1,
**dadurch gekennzeichnet,**
**dass** der Körper (34, 36, 38, 40) zwischen der Schnittplatte (12) und dem Niederhalter (14) mit einem Anpressdruck p mit 2 MPa ≤ p ≤ 20 MPa fixiert und sodann die Durchgangsbohrung (50) gestanzt wird.

4. Verfahren nach zumindest Anspruch 1,
**dadurch gekennzeichnet,**
**dass** die Durchbrechung (50) in dem platten- oder scheibenförmigen Körper (34, 36, 38, 40) im Bereich einer Dicke D des Körpers mit 0,5 mm ≤ D ≤ 10 mm, insbesondere D ≤ 2 mm gestanzt wird.

## Claims

1. Method for forming a passage recess (50) in a plate or disk-like body (34, 36, 38, 40) of a plastic or synthetic resin or pitch-bound carbon or graphite material, particularly heat-curable or thermoplastic plastic with carbon filler with a filler proportion of particularly 70 wt.% to 95 wt.%,
**characterized in**
**that** the plate or disk-like body (34, 36, 38, 40) is fixed between a die plate (12) and a hold down clamp (14) and then, using a die (30, 32), the passage opening (50) is created by punching.

2. Method according to claim 1,
**characterized in**
**that** the passage recess (50) is created by a precision blanking tool.

3. Method according to claim 1,
**characterized in**
**that** the body (34, 36, 38, 40) is fixed between the die plate (12) and the hold down clamp (14) with a contact pressure p with 2 MPa ≤ p ≤ MPa, and then the passage bore hole (50) is punched.

4. Method according to claim 1,
**characterized in**
**that** the perforation (50) is punched in the plate or disk-like body (34, 36, 38, 40) in the region of a thickness D of the body with 0.5 mm ≤ D ≤ 10 mm, especially D ≤ 2 mm.

## Revendications

1. Procédé pour réaliser un évidement traversant (50) dans un corps en forme de plaque ou de disque (34, 36, 38, 40) réalisé à partir d'un matériau de carbone ou de graphite aggloméré par matière plastique, résine synthétique ou poix, notamment d'une matière plastique durcissante ou thermoplastique avec une charge de carbone d'une proportion notamment comprise entre 70 % et 95 % en poids,
**caractérisé en ce que**
le corps en forme de plaque ou de disque (34, 36, 38, 40) est fixé entre une table de coupe (12) et un serre-flan (14), l'évidement traversant étant ensuite réalisé au moyen d'un poinçon (30, 32) par poinçonnage.

2. Procédé selon la revendication 1,
**caractérisé en ce que**
l'évidement traversant (50) est réalisé au moyen d'un outil de coupe de précision.

3. Procédé selon la revendication 1,
**caractérisé en ce que**
le corps (34, 36, 38, 40) est fixé entre la table de coupe (12) et le serre-flan (14) avec une pression d'appui p de 2 MPa ≤ p ≤ 20 MPa, l'évidement traversant (50) étant poinçonné ensuite.

4. Procédé selon au moins la revendication 1,
**caractérisé en ce que**
l'évidement traversant (50) est poinçonné dans le corps en forme de plaque ou de disque (34, 36, 38, 40) dans la plage d'une épaisseur D du corps de 0,5 mm ≤ D ≤ 10 mm, notamment de D ≤ 2 mm.
